# EUROPÄISCHE PATENTSCHRIFT

(11) **EP 2 016 794 B1**
(45) Veröffentlichungstag und Bekanntmachung des Hinweises auf die Patenterteilung: **17.03.2010**
(21) Anmeldenummer: 07724822.7
(22) Anmeldetag: 03.05.2007
(51) Int. Cl.: H04W 28/08

(54) **VERFAHREN ZUR OPTIMIERUNG DER LASTVERTEILUNG ZWISCHEN EINEM ERSTEN MOBILFUNKNETZ UND EINEM ZWEITEN MOBILFUNKNETZ**
METHOD FOR OPTIMIZING THE LOAD DISTRIBUTION BETWEEN A FIRST MOBILE RADIO NETWORK AND A SECOND MOBILE RADIO NETWORK
PROCÉDÉ POUR OPTIMISER LA RÉPARTITION DES CHARGES ENTRE UN PREMIER RÉSEAU DE RADIOCOMMUNICATION MOBILE ET UN SECOND RÉSEAU DE RADIOCOMMUNICATION MOBILE

(30) Priorität: 05.05.2006 DE 102006021281
(43) Veröffentlichungstag der Anmeldung: 21.01.2009
(73) Patentinhaber: T-Mobile International AG, 53227 Bonn (DE)
(72) Erfinder: KLATT, Axel, 50996 Köln (DE)
(74) Vertreter: Riebling, Peter
(86) Internationale Anmeldenummer: PCT/EP2007/003896
(87) Internationale Veröffentlichungsnummer: WO 2007/128487

(56) Entgegenhaltungen:
- EP-A- 1 519 607
- WO-A-94/08434
- WO-A-2005/101880
- US-A1- 2007 041 343
- "Universal Mobile Telecommunications System (UMTS); Radio Resource Control (RRC) protocol specification (3GPP TS 25.331 version 7.0.0 Release 7)" ETSI TS 125 331 V7.0.0, März 2006 (2006-03), Seiten 446-448, XP002445954 in der Anmeldung erwähnt

## Beschreibung

Die vorliegende Erfindung betrifft ein Verfahren zur Optimierung der Lastverteilung zwischen einem ersten Mobilfunknetz, beispielsweise nach UMTS-Standard, und einem zweiten Mobilfunknetz, beispielsweise nach GSM-Standard, durch Optimierung der Signalisierungssequenz beim Verbindungsaufbau in einem derartigen Mobilfunksystem. Insbesondere bezieht sich die Erfindung auf ein Verfahren zur Optimierung des Verbindungsaufbaus eines Sprach-/Videoanrufs oder einer Paketverbindung in einem Mobilfunknetz, sowie zur Lastverteilung in verschiedenartigen Mobilfunksystemen. Es ermöglicht das effiziente Zusammenwirken beim Verbindungsaufbau, beispielsweise einer Sprachverbindung, zwischen einem UMTS- und einem GSM-Netz. Weiterhin ermöglicht das Verfahren neben der effizienten Nutzung von Ressourcen in einem UMTS-System, einen direkten Aufbau, beispielsweise einer Sprachverbindung, die in einem UMTS-Netz initiiert wurde, in ein GSM-Netz.

Mobilfunk-Netzbetreiber besitzen heute die Möglichkeit neben den weit verbreiteten Mobilfunksystemen nach GSM-Standard auch Netze nach dem neuen UMTS-Standard zu betreiben. Etablierte Netzbetreiber bauen heute neben einem bereits existierenden GSM-Netz parallel oft ein UMTS-Netz auf, welches durch die Bereitstellung erweiterter Funktionalitäten, wie Multimedia-Verbindungen und höheren Paket-Datenraten, gekennzeichnet ist. Typischerweise konfigurieren heute Netzbetreiber, die sowohl ein GSM- als auch ein UMTS-Netz betreiben, ihre Netze in der Art, dass sogenannte Dualmode-Mobiltelefone, also Mobiltelefone, die sowohl GSM- als auch UMTS unterstützen, vorzugsweise auf dem UMTS-Netz "campen". "Campen" bezieht sich in diesem Zusammenhang auf den Zustand des Mobiletelefons, in welchem keine aktive Verbindung zwischen Mobiltelefon und Mobilfunknetz existiert, das Mobiltelefon jedoch beim UMTS-Netz angemeldet ist (vergleiche Spezifikation 3GPP TS25.304). Versucht ein derartig "gecamptes" Mobiltelefon nun beispielsweise eine Sprachverbindung mit dem Mobilfunknetz zu etablieren, so sendet es nach dem UMTS-Standard eine RRC CONNECTION REQUEST Nachricht an das Mobilfunknetz, wie man aus der technischen Spezifikation ERSI TS 125.331, V7.0.0; Universal Mobile Telecommunications System (UMTS); Radio Resource Control (RRC) Protocol Specification; März 2006; (vgl. 3GPP TS 25.331 Version 7.0.0 Release 7) entnehmen kann. Nach dem Stand der Technik wird das Mobilfunknetz anschließend die gewünschte Sprachverbindung im UMTS-Netz aufbauen und die Verbindung mit dem Angerufenen und anrufenden Teilnehmer herstellen. Eine Sprachverbindung belegt somit Ressourcen des UMTS-Netzes, wobei diese Verbindung auch alternativ auf dem GSM-Teil des Mobilfunknetzes ausgeführt werden könnte, da dieses die technischen Voraussetzung zur Bedienung der Bedürfnisse einer einfachen Sprachverbindung erfüllen kann.

Um zu vermeiden, dass in derartigen Mobilfunknetzen durch das vorzugsweise campen von sämtlichen Dualmode-Mobiltelefonen auf dem UMTS-Netz die Ressourcen unnötigerweise durch "simple" Sprachverbindungen belegt werden und mit zunehmender Verbreitung von UMTS- und GSM- fähigen Endgeräten die etablierten GSM-Netze durch die bevorzugte Camp-Strategie von Dualmode-Mobiltelefonen auf dem UMTS-Teil des Mobilfunknetzes "leer laufen", sind entsprechende Maßnahmen erforderlich, um die freien Ressourcen des GSM-Teiles eines Mobilfunknetzes weiter zu nutzen.

Mit dem Stand der Technik, sind Mobilfunkbetreiber heute in der Lage Techniken nutzen, die in einer bestimmten Phase des Verbindungsaufbaus oder bei bereits bestehender Verbindung die Sprachverbindung aus dem UMTS-Teil des Mobilfunknetzes in den GSM-Teil des eigenen Mobilfunknetzes "umleiten", um ggf. ungenutzte Ressourcen auf dem GSM-Netz weiter zu verwenden. Diese Techniken werden in den Spezifikationen der Mobilfunksystems oft als "Service Based Handover" oder "Directed Retry" bezeichnet (www.3gpp.org).

Der entscheidende Nachteil des Standes der Technik ist, dass die Entscheidung über die Durchführung des "Service Based Handover" oder "Directed Retry" erst in einer sehr späten Phase des Verbindungsaufbaus erfolgen kann, nämlich erst zu dem Zeitpunkt, an welchem dem Mobilfunknetz, beispielsweise dem Radio Network Controller, RNC, bei UMTS, bekannt ist, zu welchem Zweck der Verbindungsaufbau gestartet wurde. Die Information über Grund des Verbindungsaufbaus teilt ein Mobiltelefon nach UMTS Standard gemäß 3GPP TS25.331 dem Netz in der RRC CONNECTION REQUEST oder der CELL UDPATE Nachricht zwar mit, jedoch ermöglichen die heute zur Verfügung stehenden "Establishment Causes" keinen eindeutigen Rückschluss darauf, für welchen Dienst oder Service die Verbindung aufgebaut werden soll. Der Grund für die Kanalanforderung, beispielsweise Sprachübertragung, Datenübertragung, etc., wird im Informationselement Establishment Cause genannt. Speziell kann mit den heute vorhandenen Establishment Causes nicht eindeutig bestimmt werden, ob beim Verbindungsaufbauwunsch eine leitungsvermittelte (Circuit Switched (CS)) Sprachverbindung, ein einfacher Sprachdienst (möglich über UMTS und GSM), eine Sprachverbindung mit dem sogenannten Wideband-AMR Codec oder ein Videotelefoniergespräch (nur möglich in UMTS) vom Mobiltelefon angefragt wird. Diese Information liegt der Funknetzwerksteuerung RNC als Kontroiifunktion des Funkzugangsnetzes erst zu dem Zeitpunkt vor, wenn eine sogenannte "RRC Connection" (RRC Verbindung) zwischen Mobilfunkendgerät und Radionetzwerk-Kontrolleinheit bereits aufgebaut wurde und weitere Signalisierung in Richtung Kern-Netzwerk (Core Network: CN) über das lu-Interface durchgeführt wurde (3GPP TS 25.413). Nach dem Stand der Technik ist der frühste Zeitpunkt der Entscheidung, ob es sich um den Aufbau eines Sprach- oder eines Videodienstes handelt, mit dem Eintreffen der RANAP: RAB ASSIGNMENT Nachricht im RNC möglich.

WO 2005/101880 A1 offenbart ein Verfahren zur Optimierung der Lastverteilung zwischen einem ersten Mobilfunknetz, beispielsweise nach UMTS-Standard, und einem zweiten Mobilfunknetz, beispielsweise nach GSM-Standard, bei dem einer Radionetzwerk-Kontrolleinheit eines Funkzugangsnetzwerks in einer möglichst frühen Phase des Verbindungsaufbaus seitens eines Mobilfunkendgeräts genaue Informationen über die Art des Verbindungswunsches zur Verfügung gestellt werden. Anhand dieser Informationen wird eine Ressourcenverteilung zwischen den beiden Mobilfunknetzen vorgenommen, bevor vom Funkzugangsnetzwerk RAN eine Verbindung zu einem Kernnetzwerk eines der Mobilfunknetze aufgebaut wird.

Es ist daher die Aufgabe der Erfindung, ein Verfahren zur Optimierung der Lastverteilung zwischen einem ersten Mobilfunknetz nach UMTS-Standard und einem zweiten Mobilfunknetz nach GSM-Standard bereit zu stellen, das bereits in einer sehr frühen Phase des Verbindungsaufbaus greift.

Diese Aufgabe wird erfindungsgemäß durch ein Verfahren gemäß dem unabhängigen Anspruch 1 gelöst, auf dessen Merkmale hier Bezug genommen wird, sowie durch entsprechende Computerprogramme gemäß dem Ansprüches 9 und 10, und durch eine entsprechende Anordrung gemäß dem Anspruch 11.

Bevorzugte Ausgestattungen und vorteilhafte Merkmale der Erfindung ergeben sich aus den abhängigen Ansprüchen, auf deren Merkmale hier Bezug genommen wird.

Das vorliegende erfindungsgemäße Verfahren ermöglicht die Unterscheidung zwischen verschiedenen Sprach- und Videoanrufen bereits in einer sehr frühen Phase des Verbindungsaufbaus. Weiterhin hat dieses Verfahren darüber hinaus den entscheidenden Vorteil, dass der RNC bestimmte Prozeduren, wie die potentielle Reservierung von Ressourcen und die Konfiguration des "Compressed Mode", zur Messung von GSM-Zellen, bereits vor dem Eintreffen der RANAP: RAB ASSIGNMENT Nachricht für das Mobilfunkgerät konfigurieren kann.

Das beschriebene Verfahren kann vorteilhaft in einem Mobilfunksystem nach dem E-UTRAN oder einem anderen standardisiertem Mobilfunksystem, wie WLAN, WiMAX, cdma200 EV-DO, genutzt werden.

Das erfindungsgemäße Verfahren beruht darauf, die so genannten "Establishment Causes", die für ein Mobilfunksystem nach UMTS-Standard in 3GPP TS 25.331 definiert sind, derart zu erweitern, dass der RNC bereits in einer sehr frühen Phase des Verbindungsaufbaus, und zwar vor dem Eintreffen der CN Signalisierung (Signalisierung vom Kernnetzwerk) im RANAP: RAB ASSIGNMENT, in der Lage ist auf den gewünschten Service zu schließen und diese Information für die Vorbereitung von Konfigurationen oder das Anstoßen eines "Service Based Handovers" (für eine Sprachverbindung) nach GSM zu nutzen.

Eine alternative Ausführungsform des erfindungsgemäßen Verfahrenes könnte derart gestaltet sein, dass an Stelle der Erweiterung der bereits in den Spezifikationen existierenden "Establishment Causes" neue Informationselemente eingeführt werden, die einen Rückschluss auf den angefragten Dienst in der frühen Verbindungsaufbauphase (also in der RRC CONNECTION REQUEST Nachricht) ermöglichen.

Eine beispielhafte Ausführung des erfindungsgemäßen Verfahrens besteht darin, die Nachrichten zur Übermittlung des Verbindungswunsches eines Mobiltelefons nach UMTS-Standard derart zu erweitern, dass neben den heute existierenden Establishment Causes, die in 3GPP TS25.331 definiert sind, mindestens zwei weitere definiert werden, die die Unterscheidung zwischen dem Verbindungsaufbauwunsch für eine Sprachverbindung und für eine Videoverbindung in der ersten Phase des Verbindungsaufbaus ermöglichen.
Hierzu wird erfindungsgemäß vorgeschlagen, weitere Establishment Causes "originating CS Voice Calls", "terminating CS Voice Call", "Originating CS Video Call" und "terminating CS Video Call" zu den bereits existierenden hinzuzufügen. Alternativ können diese Informationen auch in einem neu zu definierenden Informationselement innerhalb der RRC CONNECTION REQUEST Nachricht übersandt werden.

Der Vorteil des erfindungsgemäßen Verfahrens gegenüber dem Stand der Technik resultiert aus der Tatsache, dass bereits in der ersten Phase des Verbindungsaufbaus, also beispielsweise nach Übertragung der RRC CONNECTION REQUEST oder der CELL UPDATE Message, der RNC in der Lage ist, entsprechende Entscheidungen basierend auf der Unterscheidung zwischen Sprach- und Videoverbindung zu treffen, ohne auf die Übersendung der von CN initiierten RANAP: RAB ASSIGNMENT Nachricht zu warten.

Erfindungsgemäß kann ein RNC, der die entsprechende Information in der RRC CONNECTION REQUEST oder der CELL UPDATE Message bekommt, einen Verbindungswunsch für eine Sprachverbindung mittels der "RRC Connection Reject" Prozedur (3GPP TS 25.331) nach GSM "umleiten", um die ggf. freien Ressourcen in dem GSM-System für die Ausführung der Sprachverbindung zu benutzen. Alternativ kann diese Information in dem frühen Zeitpunkt des Verbindungsaufbaus genutzt werden, um entsprechende Radio Bearer Konfigurationen zu reservieren, das Mobilfunkendgerät mit Messkonfigurationen ("Compressed Mode") zu konfigurieren oder weitere Prozeduren durchzuführen.

Ausführungsbeispiele der Erfindung werden nachfolgend anhand der Zeichnungen näher erläutert. Aus den Zeichnungen und ihrer Beschreibung ergeben sich weitere Merkmale und Vorteile der Erfindung.

Figur 1 zeigt beispielhaft eine Signalisierung zwischen einem Mobilfunkendgerät UE und einem Funkzugangsnetz RAN bei einer Umleitung eines Verbindungsaufbauwunsches basierend auf "Call-Type" Indikation.

Figur 2 zeigt beispielhaft eine Signalisierung zwischen einem Mobilfunkendgerät UE, einem Funkzugangsnetz RAN und einem Kernnetzwerk (CN) bei einer Vorkonfiguration eines Funkträgers (Radio Bearers) aufgrund der Signalisierung in einer RRC Connection Request Nachricht.

In den Zeichnungen werden die standardisierten und von Fachleuten weltweit verwendeten, englischsprachigen Bezeichnungen der Signalisierungsnachrichten und ihres Informationsinhalts verwendet.

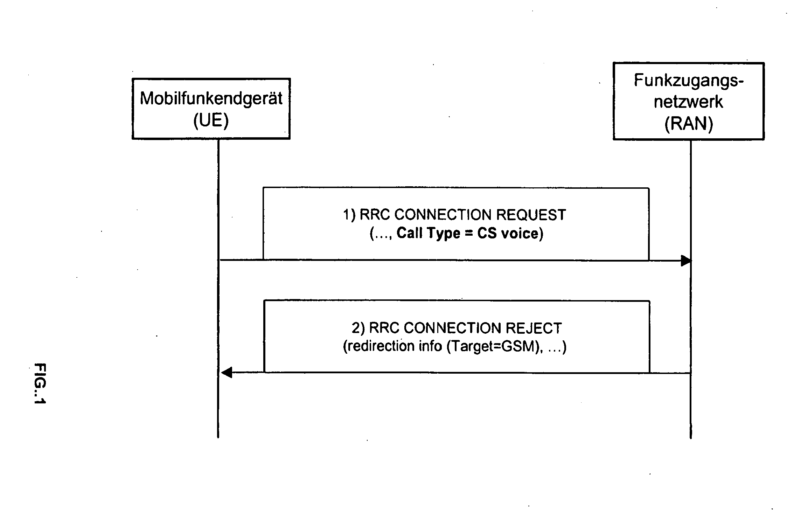

Als Ausführungsbeispiel des erfindungsgemäßen Verfahrens ist in Figur 1 beispielhaft eine Signalisierung zwischen einem Mobilfunkendgerät UE und einem Funkzugangsnetz RAN dargestellt. Hierbei erfolgt eine Umleitung eines Verbindungsaufbauwunsches basierend auf "Call-Type" Indikation ohne Notwendigkeit eine Verbindung zwischen RAN und einem Kernnetzwerk CN aufzubauen.

Ein Mobilfunkendgerät UE übermittelt einen Verbindungswunsch an das Funkzugangsnetz RAN bzw. die zugeordnete Funknetzwerksteuerung RNC. Dazu übermittelt das Mobilfunkendgerät eine sogenannte RRC Connection Request Nachricht an den RNC (Schritt 1). Die RRC Connection Request Nachricht enthält unter anderem ein Informationsfeld: "Call Type", das Informationen enthält, ob es sich bei dem Verbindungswunsch beispielsweise um Sprache ("CS voice"), Daten, oder Video handelt. Basierend auf der Information "Call Type" kann das RAN bereits vor Eintreffen der RAB ASSIGNMENT Nachricht vom Kernnetzwerk, ohne dass überhaupt eine Verbindung zum Kernnetzwerk aufgebaut werden muss, die Verbindung in eine andere Radio Access Technology (GSM, LTE) oder auf eine andere UMTS-Frequenz umleiten.

Beispielsweise kann ein RNC, der die entsprechende Information "Call Type"="CS voice" in der RRC CONNECTION REQUEST oder der CELL UPDATE Nachricht bekommt, den Verbindungswunsch für die angeforderte Sprachverbindung mittels einer "RRC Connection Reject" Prozedur (3GPP TS 25.331) an ein verfügbares GSM-Netz "umleiten", um die ggf. freien Ressourcen in dem GSM-System für die Ausführung der Sprachverbindung zu benutzen (Schritt 2).

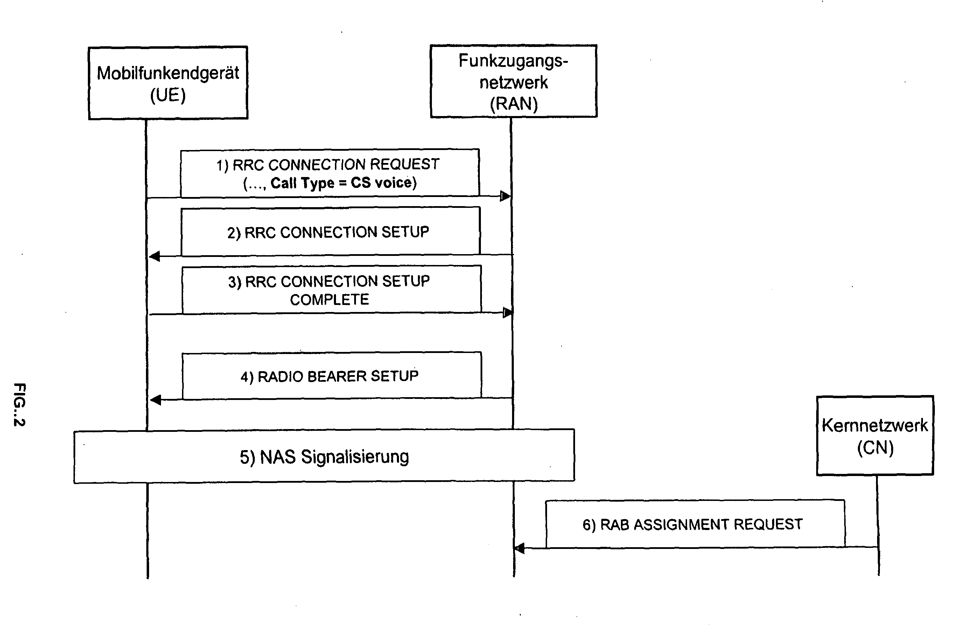

In Figur 2 ist eine Signalisierung zwischen einem Mobilfunkendgerät UE, einem Funkzugangsnetz RAN und einem Kernnetzwerk (CN) bei einer Vorkonfiguration eines Radio Bearers aufgrund der Signalisierung in der RRC Connection Request Nachricht dargestellt. Die Vorkonfiguration kann erfindungsgemäß erfolgen noch bevor eine RAB Anforderung vom Kernnetzwerk CN im Funkzugangsnetz RAN eintrifft.

Ein Mobilfunkendgerät UE übermittelt einen Verbindungswunsch an das Funkzugangsnetz RAN bzw. die zugeordnete Funknetzwerksteuerung RNC. Dazu übermittelt das Mobilfunkendgerät eine sogenannte RRC Connection Request Nachricht an den RNC (Schritt 1). Die RRC Connection Request Nachricht enthält unter anderem ein Informationsfeld: "Call Type", das Informationen enthält, ob es sich bei dem Verbindungswunsch beispielsweise um Sprache ("CS voice"), Daten, oder Video handelt. Basierend auf dieser "Call Type" Information kann das RAN einen entsprechenden Radio Bearer aufbauen, indem es eine RRC Connection Setup Nachricht an das Mobilfunkendgerät übermittelt (Schritt 2), welche von Mobilfunkendgerät mit einer RRC Connection Setup Complete Nachricht quittiert wird (Schritt 3). Mittels einer Radio Bearer Setup Nachricht wird dann ein für den Verbindungswunsch geeigneter Funkträger (Radio Bearer) zugeteilt (Schritt 4). Es kann nun mit der standardisierten Signalisierung (NAS Signalisierung) fortgefahren werden (Schritt 5).
Erst jetzt erfolgt eine RAB ASSIGNMENT Nachricht vom Kernnetzwerk CN. Die "Call Type" Information wird in diesem Beispiel also in einem frühen Zeitpunkt des Verbindungsaufbaus genutzt, um eine entsprechende Radio Bearer Konfigurationen zu reservieren noch bevor eine RAB Assignment Nachricht vom Kernnetzwerk CN eintrifft. In diesem frühen Stadium des Verbindungsaufbaus kann es außerdem vorgesehen sein, das Mobilfunkendgerät mit Messkonfigurationen ("Compressed Mode") zu konfigurieren oder weitere Prozeduren durchzuführen.

## Patentansprüche

1. Verfahren zur Optimierung der Lastverteilung, zwischen einem ersten Mobilfunknetz, beispielsweise nach UMTS-Standard, und einem zweiten Mobilfunknetz, beispielsweise nach GSM-Standard, bei dem einer Radionetzwerk-Kontrolleinheit eines Funkzugangsnetzwerks in einer möglichst frühen Phase des Verbindungsaufbaus seitens eines Mobilfunkendgeräts genaue Informationen über die Art des Verbindungswunsches zur Verfügung gestellt werden, und anhand dieser Informationen eine Ressourcenverteilung zwischen den beiden Mobilfunknetzen vorgenommen wird, bevor vom Funkzugangsnetzwerk RAN eine Verbindung zu einem Kernnetzwerk eines der Mobilfunknetze aufgebaut wird, wobei das Mobilfunkendgerät nach dem UMTS-Standard in einer RRC CONNECTION REQUEST Nachricht angibt, ob es sich bei dem angeforderten Verbindungswunsch um eine Sprach-, eine Video- oder eine anderweitig klassifizierte Verbindung handelt, **dadurch gekennzeichnet, dass** das Funkzugangsnetzwerk RAN basierend auf dieser Information einen entsprechenden Radio Bearer aufbaut, indem es eine RRC Connection Setup Nachricht an das Mobilfunkendgerät übermittelt, welche vom Mobilfunkendgerät mit einer RRC Connection Setup Complete Nachricht quittiert wird, wobei mittels einer Radio Bearer Setup Nachricht dann ein für den Verbindungswunsch geeigneter Funkträger, Radio Bearer, zugeteilt und mit einer standardisierten NAS Signalisierung fortgefahren wird, und erst dann eine RAB ASSIGNMENT Nachricht vom Kernnetzwerk an das Funkzugangsnetzwerk erfolgt.

2. Verfahren nach Anspruch 1, **dadurch gekennzeichnet, dass** das Mobilfunkendgerät nach dem UMTS-Standard in der RRC CONNECTION REQUEST Nachricht angibt, ob es sich bei dem angeforderten Verbindungswunsch um eine Sprachverbindung mit narrowband-AMR NB-AMR Sprachcodec oder wideband-AMR WB-AMR Codec handelt.

3. Verfahren nach Anspruch 1 oder 2, **dadurch gekennzeichnet, dass** nachdem das Mobilfunkendgerät nach dem UMTS-Standard in der RRC CONNECTION REQUEST Nachricht genaue Angaben über den angeforderten Verbindungswunsch gemacht hat die Radionetwerk-Kontrolleinheit des ersten Mobilfunknetzes direkt nach einer Klassifizierung eines angeforderten Dienstes entsprechende physikalischen Kanäle, Transport Kanäle und/oder Radio Bearer zwischen der Radionetzwerk-Kontrolleinheit und dem Mobilfunkendgerät konfiguriert und nicht eine Signalisierung vom Kernnetzwerk in der RANAP: RAB ASSIGNMENT Nachricht abwartet.

4. Verfahren nach Anspruch 1 bis 3, **dadurch gekennzeichnet, dass** nachdem das Mobilfunkendgerät nach dem UMTS-Standard in der RRC CONNECTION REQUEST Nachricht genaue Angaben über den angeforderten Verbindungswunsch gemacht hat die Radionetzwerk-Kontrolleinheit des ersten Mobilfunknetzes direkt nach einer Klassifizierung eines angeforderten Dienstes Entscheidungen trifft, ob der gewählte Dienst auch in dem zweiten Mobilfunknetz durchführbar ist.

5. Verfahren nach Anspruch 1bis 4, **dadurch gekennzeichnet, dass** nachdem das Mobilfunkendgerät nach dem UMTS-Standard in der RRC CONNECTION REQUEST Nachricht genaue Angaben über den angeforderten Verbindungswunsch gemacht hat die Radionetzwerk-Kontrolleinheit des ersten Mobilfunknetzes direkt nach einer Klassifizierung eines angeforderten Dienstes Entscheidungen trifft, ob der gewählte Dienst auch in dem zweiten Mobilfunknetz durchführbar ist, und wenn dieses nicht möglich ist die sonst übliche Konfiguration eines so genannten "Compressed Mode" nicht durchführt, da ein Handover dieser Verbindung zum zweiten Mobilfunknetz ohnehin nicht möglich ist.

6. Verfahren nach Anspruch 1 bis 4, **dadurch gekennzeichnet, dass** nachdem das Mobilfunkendgerät nach dem UMTS-Standard in der RRC CONNECTION REQUEST Nachricht genaue Angaben über den angeforderten Verbindungswunsch gemacht hat die Radionetwerk-Kontrolleinheit des ersten Mobilfunknetzes direkt nach einer Klassifizierung eines angeforderten Dienstes Entscheidungen trifft, ob der gewählte Dienst auch in dem zweiten Mobilfunknetz durchführbar ist und beispielsweise für eine NB-AMR Verbindung oder allgemein eine CS-Sprachverbindung, ein so genanntes "Direct Retry" während der Signalisierungsphase angestoßen wird, um die Verbindung direkt über das zweite Mobilfunknetz aufzubauen und somit keine UTRAN Ressourcen des einen Mobilfunknetzes zu allokieren, und die Verbindung im Anschluss mittels Handover zum zweiten Mobilfunknetz oder einer anderen Technologie überzuleiten.

7. Verfahren nach Anspruch 1 bis 6, **dadurch gekennzeichnet, dass** nachdem das Mobilfunkendgerät nach dem UMTS-Standard in der RRC CONNECTION REQUEST Nachricht genaue Angaben über den angeforderten Verbindungswunsch gemacht hat die Radionetzwerk-Kontrolleinheit des ersten Mobilfunknetzes direkt nach einer Klassifizierung eines angeforderten Dienstes Entscheidungen trifft, die zur weiteren Radionetzwerk-Kontrolleinheit internen Weiterverarbeitung verwendet werden.

8. Verfahren nach einem der Ansprüche 1 bis 7, welches in einem Mobilfunksystem nach dem E-UTRAN oder einem anderen standardisiertem Mobilfunksystem, wie WLAN, WiMAX, cdma200 EV-DO, genutzt wird.

9. Computerprogramm mit Programminstruktionen, welches auf einem Mobilkommunikationsendgerät ausgeführt wird, zur Durchführung des Verfahrens gemäß den Ansprüchen 1 bis 8.

10. Computerprogramm mit Programminstruktionen, welches auf einer Radionetzwerk-Kontrolleinheit ausgeführt wird, zur Durchführung der Schritte des Verfahrens gemäß den Ansprüchen 1 bis 8.

11. Anordnung mit mindestens einer Recheneinheit CPU und einem Speicher, und Mitteln zur Durchführung der Schritte des Verfahrens gemäß den Ansprüchen 1 bis 8.

## Claims

1. Process for optimising the load distribution between a first mobile radiocommunications network, for example according to UMTS standard, and a second mobile radiocommunications network, for example according to GSM standard, in which precise information about the type of connection request is made available to a radio network control unit of a radio access network in as early a phase as possible of the connection set-up on the part of a mobile radiocommunications terminal, and using this information resource distribution is carried out between the two mobile radiocommunications networks before a connection to a core network of one of the mobile radiocommunications networks is set up by the radio access network RAN, wherein the mobile radiocommunications terminal according to the UMTS standard indicates in an RRC CONNECTION REQUEST message whether the required connection request is a voice connection, a video connection or an otherwise classified connection, **characterised in that** the radio access network RAN sets up a corresponding Radio Bearer based on this information by transmitting an RRC Connection Setup message to the mobile radiocommunications terminal which is acknowledged by the mobile radiocommunications terminal with an RRC Connection Setup Complete message, wherein by means of a Radio Bearer Setup message, then a radio carrier, Radio Bearer, which is suitable for the connection request is allocated and continued with standardised NAS signalling, and only then is an RAB ASSIGNMENT message effected by the core network to the radio access network.

2. Process according to claim 1, **characterised in that** the mobile radiocommunications terminal according to the UMTS standard indicates in the RRC CONNECTION REQUEST message whether the required connection request is a voice connection with narrowband AMR NB-AMR voice codec or wideband AMR WB-AMR codec.

3. Process according to claim 1 or 2, **characterised in that** after the mobile radiocommunications terminal according to the UMTS standard in the RRC CONNECTION REQUEST message has made precise statements about the required connection request, the radio network control unit of the first mobile radiocommunications network directly after classification of a required service, configures corresponding physical channels, transport channels and/or Radio Bearer between the radio network control unit and the mobile radiocommunications terminal and does not wait for signalling from the core network in the RANAP: RAB ASSIGNMENT message.

4. Process according to claim 1 to 3, **characterised in that** after the mobile radiocommunications terminal according to the UMTS standard in the RRC CONNECTION REQUEST message has made precise statements about the required connection request, the radio network control unit of the first mobile radiocommunications network directly after classification of a required service makes decisions whether the selected service can also be implemented in the second mobile radiocommunications network.

5. Process according to claim 1 to 4, **characterised in that** after the mobile radiocommunications terminal according to the UMTS standard in the RRC CONNECTION REQUEST message has made precise statements about the required connection request, the radio network control unit of the first mobile radiocommunications network directly after classification of a required service makes decisions whether the selected service can also be implemented in the second mobile radiocommunications network, and if this is not possible does not implement the otherwise conventional configuration of a so-called "Compressed Mode", since a handover of this connection to the second mobile radiocommunications network is in any case not possible.

6. Process according to claim 1 to 4, **characterised in that** after the mobile radiocommunications terminal according to the UMTS standard in the RRC CONNECTION REQUEST message had made precise statements about the required connection request, the radio network control unit of the first mobile radiocommunications network directly after classification of a required service makes decisions whether the selected service can also be implemented in the second mobile radiocommunications network and for example for an NB-AMR connection or generally a CS voice connection, a so-called "Direct Retry" is initiated during the signalling phase to set up the connection directly via the second mobile radiocommunications network and hence not to allocate UTRAN resources of the one mobile radiocommunications network, and to transfer the connection subsequently by means of handover to the second mobile radiocommunications network or another technology.

7. Process according to claim 1 to 6, **characterised in that** after the mobile radiocommunications terminal according to the UMTS standard in the RRC CONNECTION REQUEST message has made precise statements about the required connection request, the radio network control unit of the first mobile radiocommunications network directly after classification of a required service makes decisions which are used for further processing which is internal to the further radio network control unit.

8. Process according to one of claims 1 to 7, which is used in a mobile radiocommunications system according to E-UTRAN or another standardised mobile radiocommunications system, such as WLAN, WiMAX, cdma200 EV-DO.

9. Computer program with program instructions which is executed on a mobile communications terminal, for carrying out the process according to claims 1 to 8.

10. Computer program with program instructions which is executed on a radio network control unit to carry out the steps of the process according to claims 1 to 8.

11. Arrangement with at least one computing unit CPU and a memory, and means for carrying out the steps of the process according to claims 1 to 8.

## Revendications

1. Procédé pour optimiser la répartition des charges entre un premier réseau mobile, par exemple selon la norme UMST, et un second réseau mobile, par exemple selon la norme GSM, selon lequel des informations précises sur le type de souhait de communication sont mises à la disposition d'une unité de contrôle de réseau radio d'un réseau d'accès radio lors d'une phase se présentant le plus tôt possible de l'établissement de la communication, du côté d'un terminal, et à l'aide de ces informations une répartition des ressources est effectuée entre les deux réseaux mobiles avant que le réseau d'accès radio RAN n'établisse une communication avec un réseau de base de l'un des réseaux mobiles, et selon lequel le terminal mobile indique selon la norme UMTS, dans un message RRC CONNECTION REQUEST, s'il s'agit, pour le souhait de communication émis, d'une communication vocale, vidéo où classée d'une autre manière,
**caractérisé en ce que** le réseau d'accès radio RAN, sur la base de cette information, établit un support radio correspondant en transmettant au terminal mobile un message RRC Connection Setup qui fait l'objet d'un accusé de réception de la part du terminal mobile avec un message RRC Connection Setup Complete, étant précisé qu'un support radio, Radio Bearer, adapté au souhait de communication est ensuite attribué à l'aide d'un message Radio Bearer Setup, qu'on poursuit avec une signalisation NAS normalisée et qu'il y a à ce moment seulement un message RAB ASSIGNMENT du réseau de base vers le réseau d'accès radio.

2. Procédé selon la revendication 1, **caractérisé en ce que** le terminal mobile indique selon la norme UMTS, dans le message RRC CONNECTION REQUEST, s'il s'agit, pour le souhait de communication émis, d'une communication vocale avec un codec vocal à bande étroite AMR NB ou avec un codec à large bande WB-AMR.

3. Procédé selon la revendication 1 ou 2, **caractérisé en ce que**, après que le terminal mobile a donné selon la norme UMTS, dans le message RRC CONNECTION REQUEST, des indications précises sur le souhait de communication émis, l'unité de contrôle de réseau radio du premier réseau mobile configure directement selon une classification d'un service demandé des canaux physiques, des canaux de transport et/ou des supports radio correspondants entre l'unité de contrôle de réseau radio et le terminal mobile, et n'attend pas une signalisation du réseau de base dans le message RANAP:RAB ASSIGNMENT.

4. Procédé selon les revendications 1 à 3, **caractérisé en ce que**, après que le terminal mobile a donné selon la norme UMTS, dans le message RRC CONNECTION REQUEST, des indications précises sur le souhait de communication émis, l'unité de contrôle de réseau radio du premier réseau mobile prend directement selon une classification d'un service demandé des décisions pour dire si le service choisi est réalisable aussi dans le second réseau mobile.

5. Procédé selon les revendications 1 à 4, **caractérisé en ce que**, après que le terminal mobile a donné selon la norme UMTS, dans le message RRC CONNECTION REQUEST, des indications précises sur le souhait de communication émis, l'unité de contrôle de réseau radio du premier réseau mobile prend directement selon une classification d'un service demandé des décisions pour dire si le service choisi est réalisable aussi dans le second réseau mobile, et si cela n'est pas possible elle ne réalise pas la configuration courante de ce qu'on appelle un "Compressed Mode", étant donné qu'un transfert de cette communication vers le second réseau mobile n'est pas possible, de toutes façons.

6. Procédé selon les revendications 1 à 4, **caractérisé en ce que**, après que le terminal mobile a donné selon la norme UMTS, dans le message RRC CONNECTION REQUEST, des indications précises sur le souhait de communication émis, l'unité de contrôle de réseau radio du premier réseau mobile prend directement selon une classification d'un service demandé des décisions pour dire si le service choisi est réalisable aussi dans le second réseau mobile, et par exemple pour une communication NB-AMR ou généralement une communication vocale CS ce qu'on appelle un "Direct Retry" est déclenché pendant la phase de signalisation afin d'établir la communication directement par l'intermédiaire du second réseau mobile et, ainsi, de ne pas allouer de ressources UTRAN de l'un des réseaux mobiles et de retransmettre ensuite la communication, par transfert, au second réseau mobile ou à une autre technologie.

7. Procédé selon les revendications 1 à 6, **caractérisé en ce que**, après que le terminal mobile a donné selon la norme UMTS, dans le message RRC CONNECTION REQUEST, des indications précises sur le souhait de communication émis, l'unité de contrôle de réseau radio du premier réseau mobile prend directement selon une classification d'un service demandé des décisions qui sont utilisées pour la suite du traitement interne de l'unité de contrôle de réseau radio.

8. Procédé selon l'une des revendications 1 à 7, qui est utilisé dans un système mobile selon E-UTRAN ou un autre système mobile normalisé, comme WLAN, WiMAX, cdma200 EV-DO.

9. Programme informatique avec des instructions de programme, qui est exécuté sur un terminal de communication mobile, pour la mise en oeuvre du procédé selon les revendications 1 à 8.

10. Programme informatique avec des instructions de programme, qui est exécuté sur une unité de contrôle de réseau radio, pour la mise en oeuvre des étapes du procédé selon les revendications 1 à 8.

11. Dispositif avec au moins une unité de calcul CPU et une mémoire, et avec des moyens pour la mise en oeuvre des étapes du procédé selon les revendications 1 à 8.
